(19) Europäisches Patentamt
European Patent Office
Office européen des brevets

(11) EP 3 951 986 B1

(12) **EUROPEAN PATENT SPECIFICATION**

(45) Date of publication and mention of the grant of the patent:
**03.04.2024 Bulletin 2024/14**

(21) Application number: **20794605.4**

(22) Date of filing: **08.04.2020**

(51) International Patent Classification (IPC):
***H01M 10/0567*** *(2010.01)* ***H01M 10/0525*** *(2010.01)*
*H01M 4/38 (2006.01)* *H01M 4/48 (2010.01)*
*H01M 4/525 (2010.01)* *H01M 4/587 (2010.01)*

(52) Cooperative Patent Classification (CPC):
**H01M 10/0525; H01M 10/0567;** H01M 4/386; H01M 4/483; H01M 4/525; H01M 4/587; H01M 2300/0025; Y02E 60/10

(86) International application number:
**PCT/CN2020/083610**

(87) International publication number:
**WO 2020/216060 (29.10.2020 Gazette 2020/44)**

(54) **ELECTROLYTE, LITHIUM ION BATTERY AND DEVICE CONTAINING LITHIUM ION BATTERY**

ELEKTROLYT, LITHIUM-IONEN-BATTERIE UND VORRICHTUNG MIT LITHIUM-IONEN-BATTERIE

ÉLECTROLYTE, BATTERIE AU LITHIUM-ION ET DISPOSITIF CONTENANT UNE BATTERIE AU LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.04.2019 CN 201910344676**

(43) Date of publication of application:
**09.02.2022 Bulletin 2022/06**

(73) Proprietor: **Contemporary Amperex Technology Co., Limited**
**Fujian PRC 352100 (CN)**

(72) Inventors:
- **CHEN, Peipei**
  **Ningde, Fujian 352100 (CN)**
- **FU, Chenghua**
  **Ningde, Fujian 352100 (CN)**
- **JIANG, Bin**
  **Ningde, Fujian 352100 (CN)**
- **LIANG, Chengdu**
  **Ningde, Fujian 352100 (CN)**

(74) Representative: **Kraus & Lederer PartGmbB et al**
**Thomas-Wimmer-Ring 15**
**80539 München (DE)**

(56) References cited:
**EP-A1- 1 037 293** **EP-A1- 1 926 172**
**CN-A- 1 339 846** **CN-A- 101 217 204**
**CN-A- 101 507 023** **CN-A- 103 107 359**
**CN-A- 108 091 925** **CN-A- 109 478 473**
**JP-A- H08 321 312** **JP-A- 2011 049 152**
**JP-A- 2017 117 684** **US-A1- 2011 076 572**
**US-A1- 2018 069 265**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

This application relates to the field of battery technologies, and in particular, to an electrolyte, a lithium-ion battery, and an apparatus containing such lithium-ion battery.

### BACKGROUND

Lithium-ion batteries are widely applied to electric vehicles and consumer electronic products due to their advantages such as high energy density, high output power, long cycle life, and low environmental pollution. For applications in electric vehicles, a lithium-ion battery as a power source is required to have characteristics such as low impedance, long cycle life, long storage life, and excellent safety performance. Lower impedance helps ensure good acceleration performance and kinetic performance. When being applied to hybrid electric vehicles, lithium-ion batteries can reclaim energy and improve fuel efficiency to a greater extent, and increase the charging rates of the hybrid electric vehicles. Long storage life and long cycle life allow the lithium-ion batteries to have long-term reliability and maintain good performance in the normal life cycles of the hybrid electric vehicles.

Interaction between an electrolyte and positive and negative electrodes has a great impact on the performance of a lithium-ion battery. Therefore, to meet the requirements of hybrid electric vehicles for power, it is necessary to provide an electrolyte and a lithium-ion battery with good comprehensive performance.

JP 2017 117684 A relates to a non-aqueous electrolytic solution for a non-aqueous electrolyte battery and a non-aqueous electrolyte battery using the same.

US 2018/069265 A1 relates to electrolyte formulations for electrochemical cells containing a silicon electrode.

EP 1 926 172 A1 relates to an electrolyte for rechargeable lithium battery, and rechargeable lithium battery including the same.

EP 1 037 293 A1 relates to a non-aqueous electrolyte and lithium secondary battery using the same.

CN 1 339 846 A relates to lithium ion battery manufacturing, in particular to a non-aqueous electrolyte for lithium secondary batteries.

CN 108 091 925 A relates to batteries, in particular to an energy storage battery and a preparation method thereof.

CN 103 107 359 A and US 2013/122377 A relate to an electrolyte solution for a lithium secondary battery and a lithium secondary battery including the electrolyte solution.

CN 109 478 473 A and WO 2017/204984 A1 relate to an electrochemical energy storage device.

CN 101 507 023 A and WO 2006/078866 A2 relate to an electric current-producing device having sulfone-based electrolyte.

JP H08 321312 A relates to a non-aqueous electrolyte battery.

JP 2011 049152 A relates to a non-aqueous electrolyte solution for a non-aqueous electrolyte secondary battery and a non-aqueous electrolyte secondary battery using the same.

CN 101 217 204 A and US 2008/166637 A1 relate to a non-aqueous electrolyte battery, a battery pack and a vehicle provided with the non-aqueous electrolyte battery.

### SUMMARY

In view of the problems in the Background, this application is intended to provide an electrolyte, a lithium-ion battery, and an apparatus containing such lithium-ion battery, where the lithium-ion battery can have both good high-temperature cycling performance and good low-temperature discharge performance.

In order to achieve the foregoing objective, a first aspect of this application provides an electrolyte, including a lithium salt, an organic solvent, and an additive. The additive includes a sulfur-containing compound and a silane compound, where the sulfur-containing compound is selected from one or more of sulfur hexafluoride, sulfuryl fluoride, sulfur dioxide, sulfur trioxide, carbon disulfide, dimethyl sulfide, and methyl ethyl sulfide.

A second aspect of this application provides a lithium-ion battery, including a positive electrode plate, a negative electrode plate, a separator, and an electrolyte. The positive electrode plate includes a positive electrode current collector and a positive electrode membrane that is disposed on at least one surface of the positive electrode current collector and that includes a positive electrode active material; the negative electrode plate includes a negative electrode current collector and a negative electrode membrane that is disposed on at least one surface of the negative electrode current collector and that includes a negative electrode active material; and the electrolyte is the electrolyte according to the first aspect of this application.

A third aspect of this application provides an apparatus, including the lithium-ion battery according to the second aspect of this application.

This application includes at least the following beneficial effects:
In this application, a specific sulfur-containing compound is used together with a silane compound as an additive to the electrolyte. The sulfur-containing compound can not only form a SEI film on a surface of a negative electrode of the lithium-ion battery to effectively prevent direct contact between the electrolyte and the negative electrode active material, but also optimize a passivation film formed by the silane compound on a surface of a positive electrode to reduce film-forming impedance on the surface of the positive electrode. With the synergy of the sulfur-containing compound and the silane compound, the lithium-ion battery has both good high-temperature cycling performance and good low-temperature discharge performance. The apparatus of this application includes the lithium-ion battery provided by this application, and therefore has at least the same advantages as the lithium-ion battery.

## BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from these accompanying drawings without creative efforts.

FIG. 1 is a schematic diagram of an embodiment of a lithium-ion battery.
FIG. 2 is an exploded view of FIG. 1.
FIG. 3 is a schematic diagram of an embodiment of a battery module.
FIG. 4 is a schematic diagram of an embodiment of a battery pack.
FIG. 5 is an exploded view of FIG. 4.
FIG. 6 is a schematic diagram of an embodiment of an apparatus using a lithium-ion battery as a power source.

## DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.
The electrolyte and lithium-ion battery of this application are described in detail below.
An electrolyte according to a first aspect of this application is described first.
The electrolyte according to the first aspect of this application includes a lithium salt, an organic solvent, and an additive. The additive includes a sulfur-containing compound and a silane compound, where the sulfur-containing compound is selected from one or more of sulfur hexafluoride ($SF_6$), sulfuryl fluoride ($SO_2F_2$), sulfur dioxide ($SO_2$), sulfur trioxide ($SO_3$), carbon disulfide ($CS_2$), dimethyl sulfide ($CH_3SCH_3$), and methyl ethyl sulfide, wherein the mass of the sulfur-containing compound is 0.1% to 8% of the total mass of the electrolyte, and wherein the mass of the silane compound is 0.1% to 5% of the total mass of the electrolyte.
For a negative electrode of a lithium-ion battery, in the first charge and discharge cycle, the lithium salt and organic solvent in the electrolyte may undergo a reduction reaction on a surface of a negative electrode active material, and the reaction product is deposited on a surface of a negative electrode to form a dense solid electrolyte interphase (SEI) film. The SEI film is insoluble in organic solvents, and therefore can exist stably in the electrolyte. Also, the SEI film does not allow molecules of the organic solvent to pass through, thereby effectively preventing co-intercalation of solvent molecules and avoiding damage to the negative electrode active material caused by the co-intercalation of solvent molecules. Therefore, the SEI film greatly improves the cycling performance and service life of the lithium-ion battery.
For a positive electrode of the lithium-ion battery, under the action of $CO_2$ in the air, a surface of a lithium-containing positive electrode active material is generally covered by a $Li_2CO_3$ film. Therefore, when the $Li_2CO_3$ film comes into contact with the electrolyte, the electrolyte can be oxidized on the surface of the positive electrode whether in storage or in charge-discharge cycling, and the product of oxidative decomposition will be deposited on the surface of the positive electrode to replace the original $Li_2CO_3$ film and form a new passivation film. The formation of the new passivation film will not only increase irreversible capacity of the positive electrode active material and reduce the charge and discharge efficiency of the lithium-ion battery, but also hinder deintercalation and intercalation of lithium ions in the positive electrode active material to some extent, thereby deteriorating cycling performance and charge-discharge performance of the lithium-ion battery.
During charge/discharge of the lithium-ion battery, the silane compound can form a film on a surface of a positive

electrode membrane of the lithium-ion battery to improve high-temperature cycling performance of the lithium-ion battery. However, the silane compound has relatively high film-forming impedance, which is not conducive to improving low-temperature performance of the lithium-ion battery. The sulfur-containing compound can form a passivation film on surfaces of both the positive and negative electrodes of the lithium-ion battery. The passivation film (also called solid electrolyte interphase film, SEI film) formed on the surface of the negative electrode can prevent direct contact between the electrolyte and the negative electrode active material, thereby inhibiting the reduction reaction of the electrolyte. When both the silane compound and the sulfur-containing compound are used, on the one hand, the sulfur-containing compound can form a SEI film on the surface of the negative electrode, thereby effectively preventing direct contact between the electrolyte and the negative electrode active material, and on the other hand, the sulfur-containing compound can optimize the passivation film formed by the silane compound on the surface of the positive electrode. The synergy of the two compounds allows the passivation film formed on the surface of the positive electrode to contain a Si-O-$SO_2$-component, thereby effectively reducing the film-forming impedance on the surface of the positive electrode and further improving low-temperature discharge performance of the lithium-ion battery. In addition, the particular sulfur-containing compound exhibits weak interaction between molecules, and after being dissolved in the electrolyte, can effectively reduce viscosity of the electrolyte, thereby effectively preventing solidification of the electrolyte at low temperatures and further improving the low-temperature discharge performance of the battery.

The electrolyte of this application includes both particular sulfur-containing and silane compounds, and the lithium ion battery can have both good high-temperature cycling performance and good low-temperature discharge performance.

Preferably, the sulfur-containing compound may be selected from one or more of sulfur hexafluoride ($SF_6$), sulfuryl fluoride ($SO_2F_2$), sulfur dioxide ($SO_2$), and sulfur trioxide ($SO_3$).

In the electrolyte according to the first aspect of this application, the silane compound is selected from one or more of compounds represented by formula 1, formula 2, and formula 3, where $R_1$, $R_{12}$, $R_{13}$, $R_{14}$, $R_{15}$, $R_{16}$, $R_{17}$, $R_{18}$, $R_{19}$, $R_{21}$, $R_{22}$, $R_{23}$, $R_{24}$, $R_{25}$, $R_{26}$, $R_{27}$, $R_{28}$, $R_{29}$, $R_{31}$, $R_{32}$, $R_{33}$, $R_{34}$, $R_{35}$, $R_{36}$, $R_{37}$, $R_{38}$, and $R_{39}$ are each independently selected from one or more of C1 to C6 alkyl groups or C1 to C6 haloalkyl groups:

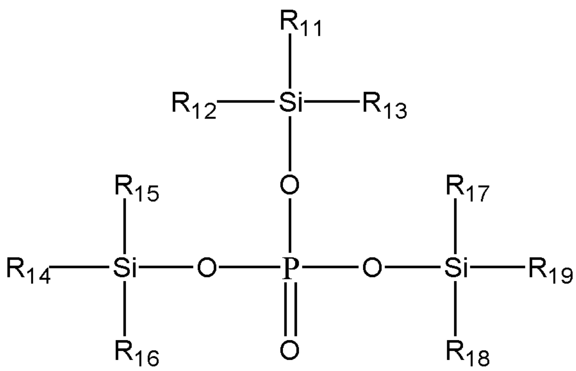

formula 1,

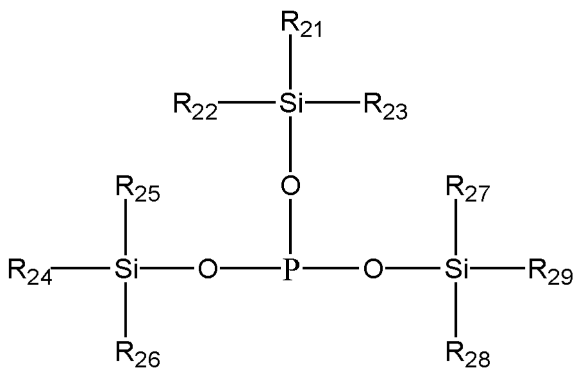

formula 2,

and

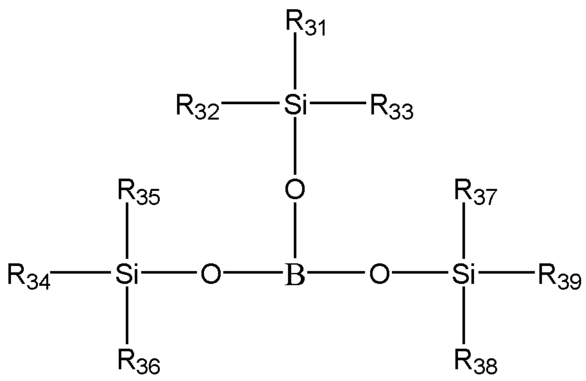

formula 3.

In the electrolyte according to the first aspect of this application, specifically, the silane compound can be selected from one or more of tris(trimethyl)silane phosphate, tris(trimethyl)silane phosphite, tris(trimethyl) silane borate, tris(triethyl)silane phosphate, tris(triethyl)silane phosphite, tris(triethyl)silane borate, tris(trifluoromethyl)silane phosphate, tris(trifluoromethyl)silane phosphite, tris(trifluoromethyl)silane borate, tris(2,2,2-trifluoroethyl)silane phosphate, tris(2,2,2-trifluoroethyl)silane phosphite, tris(2,2,2-trifluoroethyl)silane borate, tris(hexafluoroisopropyl)silane phosphate, tris(hexafluoroisopropyl)silane phosphite, and tris(hexafluoroisopropyl) silane borate.

In the electrolyte according to the first aspect of this application, the sulfur-containing compound can not only participate in forming a passivation film on the surface of the positive electrode of the lithium-ion battery but also participate in forming a SEI film on the surface of the negative electrode of the lithium-ion battery. Therefore, if the proportion of the sulfur-containing compound is excessively low, it is difficult for the sulfur-containing compound to cooperate with the silane compound to form a complete passivation film on the surface of the positive electrode and also difficult for it to form a complete SEI film on the surface of the negative electrode. Therefore, the direct contact between the electrolyte and the positive and negative electrode active materials cannot be effectively prevented. If the proportion of the sulfur-containing compound is excessively high, reaction products produced by oxidative decomposition of excessive sulfur-containing compound will accumulate on the surface of the positive electrode, increasing impedance of the passivation film formed on the surface of the positive electrode, thereby deteriorating high-temperature cycling performance of the lithium-ion battery.

The mass of the sulfur-containing compound is 0.1% to 8% of the total mass of the electrolyte.

Preferably, the mass of the sulfur-containing compound is 0.5% to 5% of the total mass of the electrolyte.

In the electrolyte according to the first aspect of this application, if the proportion of the silane compound is excessively low, the passivation film formed by the silane compound on the surface of the positive electrode can hardly effectively prevent the direct contact between the electrolyte and the positive electrode active materials, which is not conducive to improving high-temperature cycling performance of the lithium-ion battery; and if the proportion of the silane compound is excessively high, excessive silane compound will accumulate on the surface of the positive and negative electrodes, increasing film-forming impedance on the surfaces of the positive and negative electrodes, thereby deteriorating performance of the lithium-ion battery.

The mass of the silane compound is 0.1% to 5% of the total mass of the electrolyte.

Preferably, the mass of the silane compound is 0.1% to 3% of the total mass of the electrolyte.

In the electrolyte according to the first aspect of this application, the sulfur-containing compound is used together with the silane compound as an additive to the electrolyte. Therefore, setting a reasonable mass ratio for the two compounds in the electrolyte can give full play to their respective functions while ensuring their synergy, which can not only further improve low-temperature discharge performance and high-temperature cycling performance of the lithium-ion battery, but also reduce costs.

Preferably, in the electrolyte, a mass percentage of the sulfur-containing compound is greater than a mass percentage of the silane compound.

In the electrolyte according to the first aspect of this application, the lithium salt is not limited to any particular type but can be selected according to actual needs. Specifically, the lithium salt can be selected from one or more of $LiN(C_xF_{2x}+_1SO_2)(C_yF_{2y}+_1SO_2)$, $LiPF_6$, $LiBF_4$, LiBOB, $LiAsF_6$, $Li(CF_3SO_2)_2N$, $LiCF_3SO_3$, and $LiClO_4$, where x and y are natural numbers.

In the electrolyte according to the first aspect of this application, the organic solvent is not limited to any particular type but can be selected according to actual needs. Specifically, the organic solvent may be selected from one or more of propylene carbonate, ethylene carbonate, dimethyl carbonate, diethyl carbonate, dipropyl carbonate, ethyl methyl carbonate, methyl propyl carbonate, vinylene carbonate, fluoroethylene carbonate, methyl formate, ethyl acetate, ethyl propionate, propyl propionate, methyl butyrate, methyl acrylate, vinyl sulfite, propylene sulfite, dimethyl sulfite, diethyl

sulfite, 1,3-propane sultone, vinyl sulfate, acid anhydride, N-methylpyrrolidone, N-methylformamide, N-methylacetamide, acetonitrile, N,N-dimethylformamide, sulfolane, dimethyl sulfoxide, dimethyl sulfide, γ-butyrolactone, and tetrahydrofuran.

Next, a lithium-ion battery according to a second aspect of this application is described.

The lithium-ion battery according to the second aspect of this application includes a positive electrode plate, a negative electrode plate, a separator, and an electrolyte. The positive electrode plate includes a positive electrode current collector and a positive electrode membrane that is disposed on at least one surface of the positive electrode current collector and that includes a positive electrode active material, and the negative electrode plate includes a negative electrode current collector and a negative electrode membrane that is disposed on at least one surface of the negative electrode current collector and that includes a negative electrode active material. The electrolyte is the electrolyte according to the first aspect of this application. In the lithium-ion battery according to the second aspect of this application, the positive electrode active material is selected from materials capable of deintercalating and intercalating lithium ions. Specifically, the positive electrode active material may be selected from one or more of lithium cobalt oxides, lithium nickel oxides, lithium manganese oxides, lithium nickel manganese oxides, lithium nickel cobalt manganese oxides, lithium nickel cobalt aluminum oxides, and compounds obtained by adding other transition metals or non-transition metals to such compounds. However, this application is not limited to these materials.

In the lithium-ion battery according to the second aspect of this application, the negative electrode active material is selected from materials capable of intercalating and deintercalating lithium ions. Specifically, the negative electrode active material may be selected from one or more of carbon materials, silicon-based materials, tin-based materials, and lithium titanate, but this application is not limited to these materials. The carbon material can be selected from one or more of graphite, soft carbon, hard carbon, carbon fiber, and carbonaceous mesophase spherule; the graphite can be selected from one or more of artificial graphite and natural graphite; the silicon-based material may preferably be selected from one or more of elemental silicon, silicon-oxygen compounds, silicon-carbon composites, and silicon alloys; and the tin-based material may preferably be selected from one or more of elemental tin, tin oxide compounds, and tin alloys.

In the lithium-ion battery according to the second aspect of this application, the separator is not limited to any particular type but can be selected according to actual needs. For example, the separator may be, but is not limited to, polyethylene, polypropylene, polyvinylidene fluoride, or multilayer composite films thereof.

This application does not impose special limitations on a shape of the lithium-ion battery, and the lithium-ion battery may be of a cylindrical shape, a square shape, or any other shapes. FIG. 1 shows a lithium-ion battery 5 of a square structure as an example.

In some embodiments, the lithium-ion battery may include an outer package for encapsulating the positive electrode plate, the negative electrode plate, the separator, and the electrolyte.

In some embodiments, the outer package of the lithium-ion battery may be a soft package, for example, a soft bag. A material of the soft package may be plastic, for example, may include one or more of polypropylene PP, polybutylene terephthalate PBT, polybutylene succinate PBS, and the like. Alternatively, the outer package of the lithium-ion battery may be a hard shell, for example, a hard plastic shell, an aluminum shell, a steel shell, and the like.

In some embodiments, referring to FIG. 2, the outer package may include a housing 51 and a cover plate 53. The housing 51 may include a base plate and a side plate that is joined to the base plate, and the base plate and the side plate enclose an accommodating cavity. The housing 51 has an opening communicating with the accommodating cavity, and the cover plate 53 can cover the opening to close the accommodating cavity.

The positive electrode plate, the negative electrode plate, and the separator may be laminated or wound to form an electrode assembly 52 of a laminated or wound structure. The electrode assembly 52 is encapsulated in the accommodating cavity. The electrolyte infiltrates into the electrode assembly 52.

There may be one or more electrode assemblies 52 in the lithium-ion battery 5, and their quantity may be adjusted as required.

In some embodiments, such lithium-ion batteries may be combined to assemble a battery module. The battery module may include a plurality of lithium-ion batteries whose quantity may be adjusted according to the use case and capacity of the battery module.

FIG. 3 shows a battery module 4 as an example. Referring to FIG. 3, in the battery module 4, a plurality of lithium-ion batteries 5 may be sequentially arranged along a length direction of the battery module 4. Certainly, the plurality of lithium metal batteries 5 may be arranged in any other manners. Further, the plurality of lithium-ion batteries 5 may be fixed by using fasteners.

Optionally, the battery module 4 may further include a housing with an accommodating space, and the plurality of lithium-ion batteries 5 are accommodated in the accommodating space.

In some embodiments, such battery modules may be further combined to assemble a battery pack, and a quantity of battery modules included in the battery pack may be adjusted based on the use case and capacity of the battery pack.

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper

box body 2 and a lower box body 3, where the upper box body 2 can cover the lower box body 3 to form an enclosed space for accommodating the battery modules 4. The plurality of battery modules 4 may be arranged in the battery box in any manner.

A third aspect of this application provides an apparatus, where the apparatus includes the lithium-ion battery according to the second aspect of this application. The lithium-ion battery may be used as a power source for the apparatus, or an energy storage unit of the apparatus. The apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

A lithium-ion battery, a battery module, or a battery pack may be selected for the apparatus according to requirements for using the apparatus.

FIG. 6 shows an apparatus as an example. The apparatus is a battery electric vehicle, a hybrid electric vehicle, a plug-in hybrid electric vehicle, or the like. To meet requirements of the apparatus for high power and high energy density of a battery, a battery pack or a battery module may be used.

In another example, the apparatus may be a mobile phone, a tablet computer, a notebook computer, or the like. The apparatus is generally required to be light and thin, and may use a sodium-ion battery as its power source.

This application is further described with reference to examples. It should be understood that these examples are merely used to describe this application but not to limit the scope of this application. All reagents used in the embodiments are commercially available or synthesized in a conventional manner, and can be used directly without further treatment, and all instruments used in the embodiments are commercially available.

Lithium-ion batteries in Examples 1 to 20 and Comparative Examples 1 to 3 are prepared according to the following method.

(1) Preparation of a positive electrode plate

A positive electrode active material $LiNi_{0.5}Mn_{0.3}Co_{0.2}O_2$, a conductive agent acetylene black, and a binder polyvinylidene fluoride (PVDF) were dissolved in a solvent N-methylpyrrolidone (NMP) at a weight ratio of 94:3:3. The resulting mixture was thoroughly stirred to obtain a uniform positive electrode slurry. Then the positive electrode slurry was uniformly applied onto an aluminum (Al) foil positive electrode current collector, followed by drying, cold pressing, and cutting to obtain a positive electrode plate.

(2) Preparation of a negative electrode plate

A negative electrode active material artificial graphite, a conductive agent acetylene black, a binder styrene-butadiene rubber (SBR), a thickener sodium carboxymethyl cellulose (CMC) were dissolved in deionized water at a weight ratio of 95:2:2:1. The resulting mixture was thoroughly stirred to obtain a uniform negative electrode slurry. Then the negative electrode slurry was applied onto a negative electrode current collector copper (Cu) foil, followed by drying, cold pressing, and cutting to obtain a negative electrode plate.

(3) Preparation of an electrolyte

Ethylene carbonate (EC) and ethyl methyl carbonate (EMC) were mixed at a mass ratio of 30:70, then a lithium salt $LiPF_6$ with a concentration of 1 mol/L was added into the resulting mixture, followed by adding a sulfur-containing compound and a silane compound. The mixture was stirred thoroughly to obtain a uniform electrolyte. Types and proportions of the sulfur-containing compound and the silane compound are shown in Table 1.

(4) Preparation of a separator

A polyethylene (PE) porous polymer film was used as a separator.

(5) Preparation of a lithium-ion battery

The positive electrode plate, separator, and negative electrode plate were stacked in order, so that the separator was sandwiched between the positive electrode plate and the negative electrode plate for isolation, and the resulting stack was wound to obtain an electrode assembly. The electrode assembly was placed in an outer package, the prepared electrolyte was injected, and then the outer package was sealed.

Next, a test procedure for the lithium-ion battery is described as follows.

(1) Low-temperature discharge performance test for the lithium-ion battery

At room temperature, the lithium-ion battery was charged at a constant current of 0.5C to a voltage over 4.3V, then further charged at a constant voltage of 4.3V to a current below 0.05C, and then discharged at 0.5C to 3.0V, and a discharge capacity of the lithium-ion battery at that point was obtained and recorded as D0. Then, the lithium-ion battery was charged at a constant current of 0.5C to a voltage over 4.3V, and then further charged at a constant voltage of 4.3V to a current below 0.05C. The lithium-ion battery was left for 2 hours in a -10°C environment, and then discharged to 3.0V at 0.5C, and the discharge capacity of the lithium ion battery at that point was obtained and recorded as D1. Five lithium-ion batteries were tested per group, and average values were taken.

The discharge efficiency of the lithium-ion battery under 0.5C at -10°C was $\varepsilon$ (%)=D1/D0×100%.

(2) High-temperature cycling performance test for the lithium-ion battery

At 45°C, the lithium-ion battery was charged with constant current and constant voltage at 0.7C (that is, current at which the theoretical capacity was completely discharged in 2h) to an upper limit voltage of 4.3V, and then discharged at a constant current of 0.5C to a voltage of 3V, which was one charge and discharge cycle. At that point, the discharge capacity was the discharge capacity of the lithium-ion battery in the first cycle. The lithium-ion battery was tested according to the above method for 500 charge and discharge cycles, and the discharge capacity of the 500th cycle was measured.

Capacity retention rate (%) of the lithium-ion battery after 500 cycles at 45°C=(discharge capacity of the 500th cycle/discharge capacity of the first cycle)×100%

**Table 1 Parameters and performance test results of Examples 1 to 20 and Comparative Examples 1 to 3**

| | Sulfur-containing compound | | Silane compound | | Discharge efficiency under 0.5C at -10°C | Capacity retention rate after 500 cycles at 45°C |
|---|---|---|---|---|---|---|
| | Type | Content | Type | Content | | |
| Example 1* | Sulfur dioxide | 0.05% | Tris(trimethyl)silane phosphate | 1.0% | 75% | 66% |
| Example 2 | Sulfur dioxide | 0.1% | Tris(trimethyl)silane phosphate | 1.0% | 79% | 75% |
| Example 3 | Sulfur dioxide | 0.5% | Tris(trimethyl)silane phosphate | 1.0% | 82% | 80% |
| Example 4 | Sulfur dioxide | 1.0% | Tris(trimethyl)silane phosphate | 1.0% | 84% | 89% |
| Example 5 | Sulfur dioxide | 2.0% | Tris(trimethyl)silane phosphate | 1.0% | 88% | 90% |
| Example 6 | Sulfur dioxide | 3.0% | Tris(trimethyl)silane phosphate | 1.0% | 87% | 92% |
| Example 7 | Sulfur dioxide | 5.0% | Tris(trimethyl)silane phosphate | 1.0% | 86% | 89% |
| Example 8 | Sulfur dioxide | 8.0% | Tris(trimethyl)silane phosphate | 1.0% | 83% | 83% |
| Example 9* | Sulfur dioxide | 10.0% | Tris(trimethyl)silane phosphate | 1.0% | 75% | 72% |
| Example 10* | Sulfur dioxide | 3.0% | Tris(trimethyl)silane phosphate | 0.05% | 76% | 65% |

(continued)

| | Sulfur-containing compound | | Silane compound | | Discharge efficiency under 0.5C at -10°C | Capacity retention rate after 500 cycles at 45°C |
|---|---|---|---|---|---|---|
| | Type | Content | Type | Content | | |
| Example 11 | Sulfur dioxide | 3.0% | Tris(trimethyl)silane phosphate | 0.1% | 80% | 74% |
| Example 12 | Sulfur dioxide | 3.0% | Tris(trimethyl)silane phosphate | 0.5% | 83% | 79% |
| Example 13 | Sulfur dioxide | 3.0% | Tris(trimethyl)silane phosphate | 2.0% | 89% | 88% |
| Example 14 | Sulfur dioxide | 3.0% | Tris(trimethyl)silane phosphate | 3.0% | 83% | 87% |
| Example 15 | Sulfur dioxide | 3.0% | Tris(trimethyl)silane phosphate | 5.0% | 79% | 84% |
| Example 16* | Sulfur dioxide | 3.0% | Tris(trimethyl)silane phosphate | 6.0% | 75% | 70% |
| Example 17 | Sulfuryl fluoride | 3.0% | Tris(trimethyl)silane phosphite | 1.0% | 85% | 90% |
| Example 18 | Sulfur hexafluoride | 3.0% | Tris(trimethyl) silane borate | 1.0% | 83% | 89% |
| Example 19 | Carbon disulfide | 3.0% | Tris(2,2,2-trifluoroethyl)silane phosphate | 1.0% | 82% | 88% |
| Example 20 | Sulfur trioxide: Sulfur dioxide=1:1 | 3.0% | Tris (hexafluoroisopropyl) silane phosphate | 1.0% | 84% | 89% |
| Comparative Example 1 | / | / | / | / | 70% | 53% |
| Comparative Example 2 | Sulfur dioxide | 3.0% | / | / | 75% | 63% |
| Comparative Example 3 | / | / | Tris(trimethyl)silane phosphate | 1.0% | 73% | 60% |
| * Reference-Example | | | | | | |

It can be seen from the test results in Table 1 that compared with Comparative Examples 1 to 3, by adding particular types of sulfur-containing compounds and silane compounds to the electrolyte, Examples 1 to 20 of this application allowed the lithium-ion battery to have both good high-temperature cycling performance and good low-temperature discharge performance. In Comparative Example 1, neither a sulfur compound nor a silane compound was added, and therefore the lithium ion battery was poorer in both high-temperature cycling performance and low-temperature discharge performance. In Comparative Example 2, only $SO_2$ was added, and in Comparative Example 3, only tris(trimethyl)silane phosphate was added. Although the high-temperature cycling performance and low-temperature discharge performance of the lithium-ion battery had been improved to some extent, the extent of improvement was still not enough to meet actual usage requirements.

It can be seen from the test results of Examples 1 to 9 that the $SO_2$ content in Example 1 was excessively low, so that the passivation film formed by $SO_2$ on the surface of the positive electrode and the SEI film formed on the surface of the negative electrode were inadequate to effectively prevent further reactions between the electrolyte and the positive and negative electrode active materials. Therefore, the high-temperature cycling performance and low-temperature discharge performance of the lithium-ion battery could be improved, but the improvement was not obvious. The $SO_2$

and silane compound contents were both moderate in Examples 2 to 8, and therefore the lithium-ion battery could have both good high-temperature cycling performance and good low-temperature discharge performance. The $SO_2$ content in Example 9 was excessively high, and oxidative decomposition products of the excessive $SO_2$ could accumulate on the surface of the positive electrode, increasing impedance of the passivation film formed on the surface of the positive electrode, unfavorable for improving the high-temperature cycling performance of the lithium-ion battery.

It can be seen from the test results of Example 6 and Examples 10 to 16 that the silane compound content in Example 10 was too low to form a complete passivation film on the surface of the positive electrode, which was inadequate to prevent further contact between the electrolyte and the positive electrode active material, thereby being not conducive to improving the high-temperature cucling performance of the lithium-ion battery. The silane compound contents in Example 6 and Examples 11 to 15 were moderate, and therefore the lithium-ion battery had both good high-temperature cycling performance and good low-temperature discharge performance. The silane compound content in Example 16 was excessively high, and the excessive silane compound could accumulate on the surfaces of the positive and negative electrodes, increasing the film-forming impedance on the surfaces of the positive and negative electrodes, unfavorable for improving performance of the lithium-ion battery.

In conclusion, it should be noted that the foregoing embodiments are merely intended for describing the technical solutions of this application but not for limiting this application.

## Claims

1. An electrolyte, comprising:

   a lithium salt;
   an organic solvent; and
   an additive;
   wherein
   the additive comprises a sulfur-containing compound and a silane compound; and
   the sulfur-containing compound is selected from one or more of sulfur hexafluoride, sulfuryl fluoride, sulfur dioxide, sulfur trioxide, carbon disulfide, dimethyl sulfide, and methyl ethyl sulfide,
   wherein the mass of the sulfur-containing compound is 0.1% to 8% of the total mass of the electrolyte, and
   wherein the mass of the silane compound is 0.1% to 5% of the total mass of the electrolyte.

2. The electrolyte according to claim 1, wherein the silane compound is selected from one or more of compounds represented by formula 1, formula 2, and formula 3:

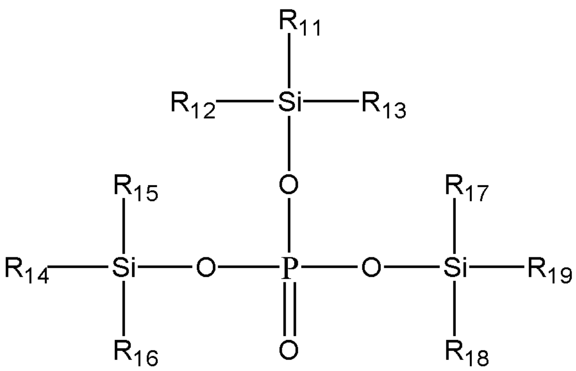

formula 1,

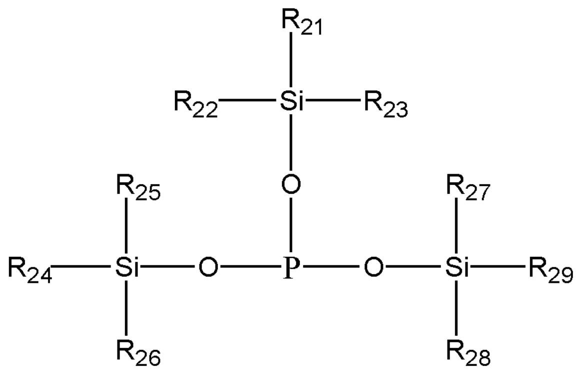

formula 2,

and

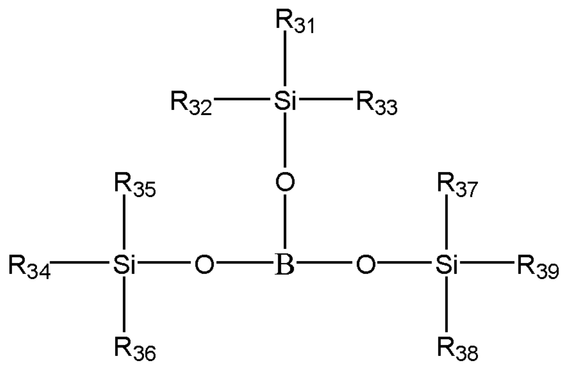

formula 3,

wherein $R_{11}$, $R_{12}$, $R_{13}$, $R_{14}$, $R_{15}$, $R_{16}$, $R_{17}$, $R_{18}$, $R_{19}$, $R_{21}$, $R_{22}$, $R_{23}$, $R_{24}$, $R_{25}$, $R_{26}$, $R_{27}$, $R_{28}$, $R_{29}$, $R_{31}$, $R_{32}$, $R_{33}$, $R_{34}$, $R_{35}$, $R_{36}$, $R_{37}$, $R_{38}$, and $R_{39}$ are each independently selected from one or more of C1 to C6 alkyl groups or C1 to C6 haloalkyl groups.

**3.** The electrolyte according to claim 1 or 2, wherein the silane compound is selected from one or more of tris(trimethyl)silane phosphate, tris(trimethyl)silane phosphite, tris(trimethyl) silane borate, tris(triethyl)silane phosphate, tris(triethyl)silane phosphite, tris(triethyl)silane borate, tris(trifluoromethyl)silane phosphate, tris(trifluoromethyl)silane phosphite, tris(trifluoromethyl)silane borate, tris(2,2,2-trifluoroethyl)silane phosphate, tris(2,2,2-trifluoroethyl)silane phosphite, tris(2,2,2-trifluoroethyl)silane borate, tris(hexafluoroisopropyl)silane phosphate, tris(hexafluoroisopropyl)silane phosphite, and tris(hexafluoroisopropyl) silane borate.

**4.** The electrolyte according to any one of claims 1 to 3, wherein the sulfur-containing compound is selected from one or more of sulfur hexafluoride, sulfuryl fluoride, sulfur dioxide, and sulfur trioxide.

**5.** The electrolyte according to any one of claims 1 to 4, wherein the mass of the sulfur-containing compound is 0.5% to 5% of the total mass of the electrolyte.

**6.** The electrolyte according to any one of claims 1 to 5, wherein the mass of the silane compound is 0.1% to 3% of the total mass of the electrolyte.

**7.** The electrolyte according to any one of claims 1 to 6, wherein in the electrolyte, a mass percentage of the sulfur-containing compound is greater than a mass percentage of the silane compound.

**8.** A lithium-ion battery, comprising:

a positive electrode plate, comprising a positive electrode current collector and a positive electrode membrane that is disposed on at least one surface of the positive electrode current collector and that comprises a positive electrode active material;

a negative electrode plate, comprising a negative electrode current collector and a negative electrode membrane

that is disposed on at least one surface of the negative electrode current collector and that comprises a negative electrode active material;
a separator; and
an electrolyte;
wherein the electrolyte is the electrolyte according to any one of claims 1 to 7.

**9.** The lithium-ion battery according to claim 8, wherein the positive electrode active material is selected from one or more of lithium nickel cobalt manganese oxides, lithium nickel cobalt aluminum oxides, and compounds obtained by adding other transition metals or non-transition metals to such compounds.

**10.** The lithium-ion battery according to claim 8 or 9, wherein the negative electrode active material is selected from one or more of carbon materials and silicon-based materials.

**11.** An apparatus, wherein the apparatus comprises the lithium-ion battery according to any one of claims 8 to 10.

**Patentansprüche**

**1.** Elektrolyt, umfassend:

ein Lithiumsalz;
ein organisches Lösungsmittel; und
einen Zusatzstoff;
wobei
der Zusatzstoff eine schwefelhaltige Verbindung und eine Silanverbindung enthält; und
die schwefelhaltige Verbindung ausgewählt ist aus einer oder mehreren der Verbindungen Schwefelhexafluorid, Sulfurylfluorid, Schwefeldioxid, Schwefeltrioxid, Schwefelkohlenstoff, Dimethylsulfid und Methylethylsulfid, wobei die Masse der schwefelhaltigen Verbindung 0,1 % bis 8 % der Gesamtmasse des Elektrolyten beträgt, und wobei die Masse der Silanverbindung 0,1 % bis 5 % der Gesamtmasse des Elektrolyten beträgt.

**2.** Elektrolyt nach Anspruch 1, wobei die Silanverbindung aus einer oder mehreren der Verbindungen der Formel 1, Formel 2 und Formel 3 ausgewählt ist:

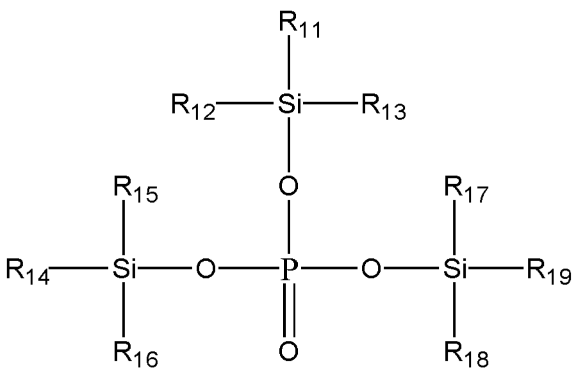

Formel 1,

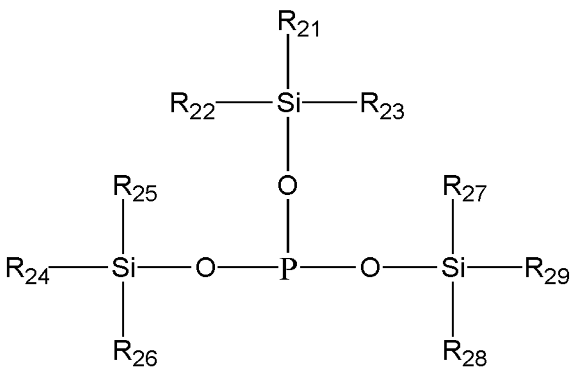

Formel 2,

und

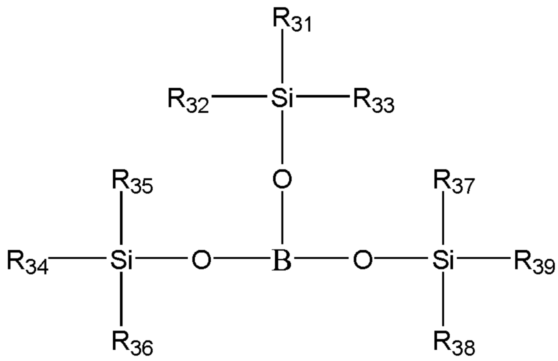

Formel 3,

worin $R_{11}$, $R_{12}$, $R_{13}$, $R_{14}$, $R_{15}$, $R_{16}$, $R_{17}$, $R_{18}$, $R_{19}$, $R_{21}$, $R_{22}$, $R_{23}$, $R_{24}$, $R_{25}$, $R_{26}$, $R_{27}$, $R_{28}$, $R_{29}$, $R_{31}$, $R_{32}$, $R_{33}$, $R_{34}$, $R_{35}$, $R_{36}$, $R_{37}$, $R_{38}$ und $R_{39}$ jeweils unabhängig voneinander aus einer oder mehreren C1- bis C6-Alkylgruppen oder C1- bis C6-Halogenalkylgruppen ausgewählt sind.

3. Elektrolyt nach Anspruch 1 oder 2, wobei die Silanverbindung ausgewählt ist aus einem oder mehreren von Tris(trimethyl)silanphosphat, Tris(trimethyl)silanphosphit, Tris(trimethyl)silanborat, Tris(triethyl)silanphosphat, Tris(triethyl)silanphosphit, Tris(triethyl)silanborat, Tris(trifluormethyl)silanphosphat, Tris(trifluormethyl)silanphosphit, Tris(trifluormethyl)silanborat, Tris(2,2,2-trifluorethyl)silanphosphat, Tris(2,2,2-trifluorethyl)silanphosphit, Tris(2,2,2,2-Trifluorethyl)silanborat, Tris(hexafluorisopropyl)silanphosphat, Tris(hexafluorisopropyl)silanphosphit und Tris(hexafluorisopropyl)silanborat.

4. Elektrolyt nach einem der Ansprüche 1 bis 3, wobei die schwefelhaltige Verbindung ausgewählt ist aus einem oder mehreren von Schwefelhexafluorid, Sulfurylfluorid, Schwefeldioxid und Schwefeltrioxid.

5. Elektrolyt nach einem der Ansprüche 1 bis 4, wobei die Masse der schwefelhaltigen Verbindung 0,5 bis 5 % der Gesamtmasse des Elektrolyten beträgt.

6. Elektrolyt nach einem der Ansprüche 1 bis 5, wobei die Masse der Silanverbindung 0,1 % bis 3 % der Gesamtmasse des Elektrolyten beträgt.

7. Elektrolyt nach einem der Ansprüche 1 bis 6, wobei in dem Elektrolyt der Massenanteil der schwefelhaltigen Verbindung größer ist als der Massenanteil der Silanverbindung.

8. Lithium-Ionen-Batterie, die Folgendes umfasst:

eine positive Elektrodenplatte, die einen positiven Elektrodenstromkollektor und eine positive Elektrodenmembran umfasst, die auf mindestens einer Oberfläche des positiven Elektrodenstromkollektors angeordnet ist und ein positives aktives Elektrodenmaterial umfasst;
eine negative Elektrodenplatte, die einen negativen Elektrodenstromkollektor und eine negative Elektrodenmembran umfasst, die auf mindestens einer Oberfläche des negativen Elektrodenstromkollektors angeordnet ist und ein negatives aktives Elektrodenmaterial umfasst;
einen Separator; und
einen Elektrolyt;
wobei der Elektrolyt der Elektrolyt nach einem der Ansprüche 1 bis 7 ist.

9. Lithium-Ionen-Batterie nach Anspruch 8, wobei das positive aktive Elektrodenmaterial ausgewählt ist aus einem oder mehreren Lithium-Nickel-Kobalt-Mangan-Oxiden, Lithium-Nickel-Kobalt-Aluminium-Oxiden und Verbindungen, die durch Hinzufügen anderer Übergangsmetalle oder Nicht-Übergangsmetalle zu solchen Verbindungen erhalten werden.

10. Lithium-Ionen-Batterie nach Anspruch 8 oder 9, wobei das negative aktive Elektrodenmaterial aus einem oder mehreren Kohlenstoffmaterialien und Materialien auf Siliziumbasis ausgewählt ist.

**11.** Vorrichtung, wobei die Vorrichtung die Lithium-Ionen-Batterie nach einem der Ansprüche 8 bis 10 umfasst.

## Revendications

**1.** Électrolyte comprenant

un sel de lithium ;
un solvant organique ; et
un additif ;
dans lequel
l'additif comprend un composé contenant du soufre et un composé silane ; et
le composé contenant du soufre est choisi parmi un ou plusieurs des composés suivants : hexafluorure de soufre, fluorure de sulfuryle, dioxyde de soufre, trioxyde de soufre, disulfure de carbone, sulfure de diméthyle et sulfure de méthyle et d'éthyle,
dans lequel la masse du composé contenant du soufre est comprise entre 0,1 % et 8 % de la masse totale de l'électrolyte, et
dans lequel la masse du composé silane est comprise entre 0,1 % et 5 % de la masse totale de l'électrolyte.

**2.** Électrolyte selon la revendication 1, dans lequel le composé silane est choisi parmi un ou plusieurs composés représentés par la formule 1, la formule 2 et la formule 3 :

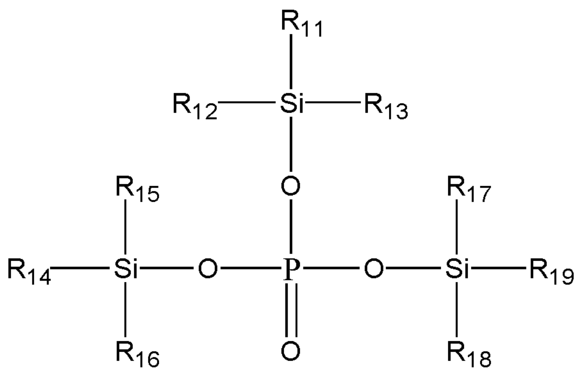

formule 1,

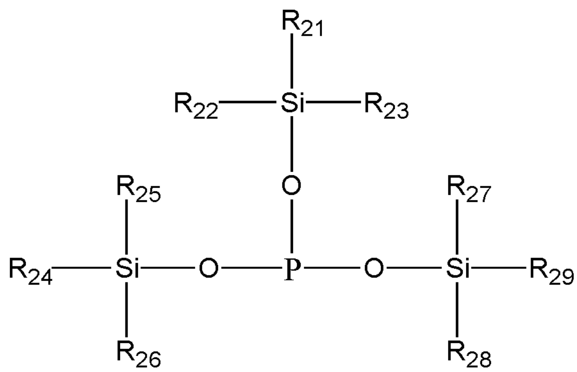

formule 2,

et

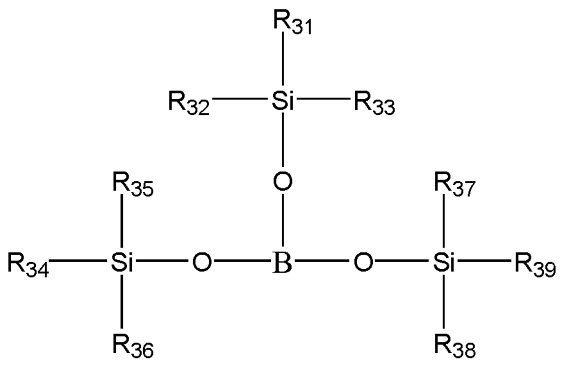

formule 3,

où $R_{11}$, $R_{12}$, $R_{13}$, $R_{14}$, $R_{15}$, $R_{16}$, $R_{17}$, $R_{18}$, $R_{19}$, $R_{21}$, $R_{22}$, $R_{23}$, $R_{24}$, $R_{25}$, $R_{26}$, $R_{27}$, $R_{28}$, $R_{29}$, $R_{31}$, $R_{32}$, $R_{33}$, $R_{34}$, $R_{35}$, $R_{36}$, $R_{37}$, $R_{38}$ et $R_{39}$ sont chacun indépendamment choisi parmi un ou plusieurs groupes alkyle en C1 à C6 ou groupes halogénoalkyle en C1 à C6.

3. Électrolyte selon la revendication 1 ou 2, dans lequel le composé silane est choisi parmi un ou plusieurs des composés suivants : tris(triméthyl)silane phosphate, tris(triméthyl)silane phosphite, tris(triméthyl) silane borate, tris(triéthyl)silane phosphate, tris(triéthyl)silane phosphite, tris(triéthyl)silane borate, tris(trifluorométhyl)silane phosphate, tris(trifluorométhyl)silane phosphate, tris(trifluorométhyl)silane borate, tris(2,2,2-trifluoroéthyl)silane borate, tris(trifluorométhyl)silane phosphite, tris(trifluorométhyl)silane borate, tris(2,2,2-trifluoroéthyl)silane phosphate, tris(2,2,2-trifluoroéthyl)silane phosphite, tris(2,2,2-trifluoroéthyl)silane borate, tris(hexafluoroisopropyl)silane phosphate, tris(hexafluoroisopropyl)silane phosphite et tris(hexafluoroisopropyl)silane borate.

4. Électrolyte selon l'une des revendications 1 à 3, dans lequel le composé contenant du soufre est choisi parmi l'hexafluorure de soufre, le fluorure de sulfuryle, le dioxyde de soufre et le trioxyde de soufre.

5. Électrolyte selon l'une des revendications 1 à 4, dans lequel la masse du composé contenant du soufre est comprise entre 0,5 % et 5 % de la masse totale de l'électrolyte.

6. Électrolyte selon l'une des revendications 1 à 5, dans lequel la masse du composé silane est comprise entre 0,1 % et 3 % de la masse totale de l'électrolyte.

7. Électrolyte selon l'une des revendications 1 à 6, dans lequel, dans l'électrolyte, un pourcentage de masse du composé contenant du soufre est supérieur à un pourcentage de masse du composé silane.

8. Batterie lithium-ion comprenant

une plaque d'électrode positive, comprenant un collecteur de courant d'électrode positive et une membrane d'électrode positive disposée sur au moins une surface du collecteur de courant d'électrode positive et comprenant un matériau actif d'électrode positive ;
une plaque d'électrode négative, comprenant un collecteur de courant d'électrode négative et une membrane d'électrode négative disposée sur au moins une surface du collecteur de courant d'électrode négative et comprenant un matériau actif d'électrode négative ;
un séparateur ; et
un électrolyte ;
dans laquelle l'électrolyte est l'électrolyte selon l'une des revendications 1 à 7.

9. Batterie lithium-ion selon la revendication 8, dans laquelle le matériau actif de l'électrode positive est choisi parmi un ou plusieurs oxydes de lithium nickel cobalt manganèse, oxydes de lithium nickel cobalt aluminium, et composés obtenus en ajoutant d'autres métaux de transition ou des métaux de non-transition à ces composés.

10. Batterie lithium-ion selon la revendication 8 ou 9, dans laquelle le matériau actif de l'électrode négative est choisi parmi un ou plusieurs matériaux à base de carbone et de silicium.

11. Appareil, dans lequel l'appareil comprend la batterie lithium-ion selon l'une des revendications 8 à 10.

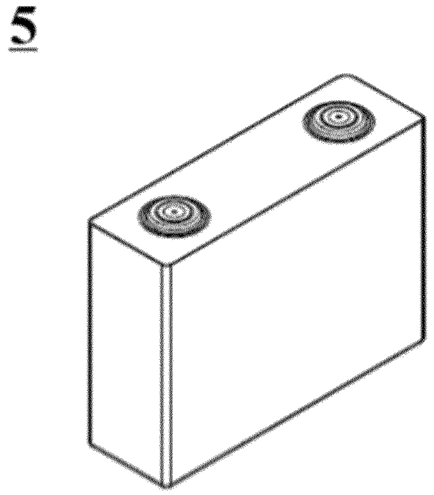


FIG. 1

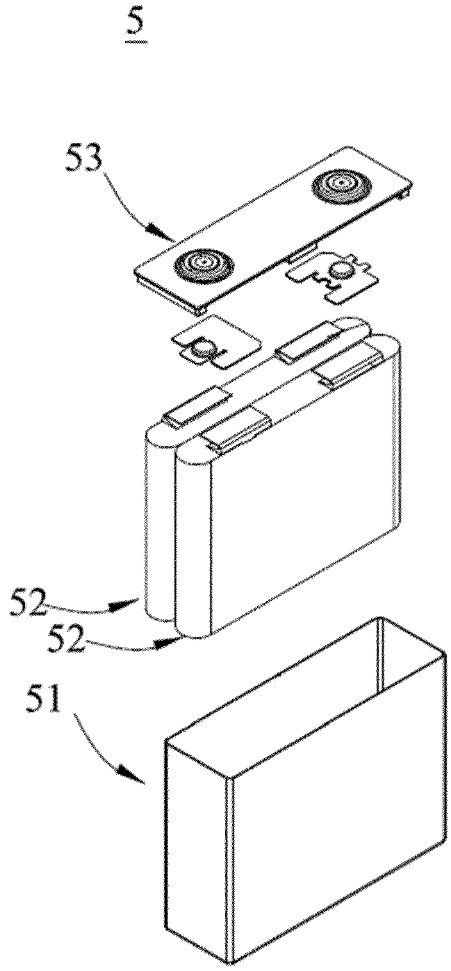


FIG. 2

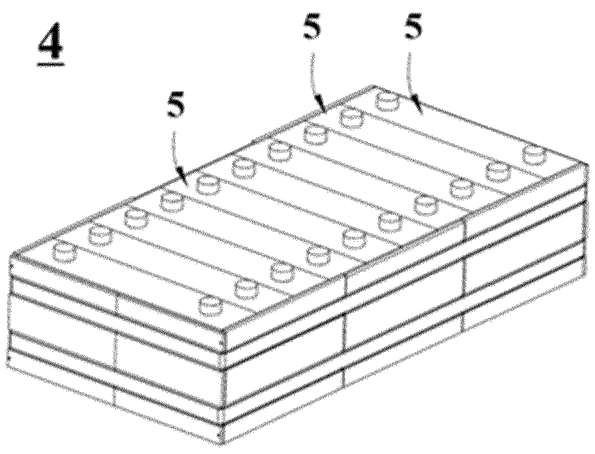


FIG. 3

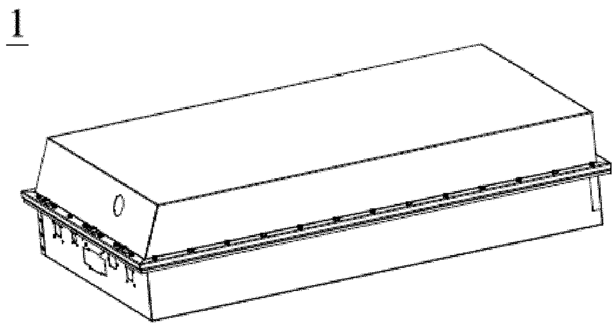


FIG. 4

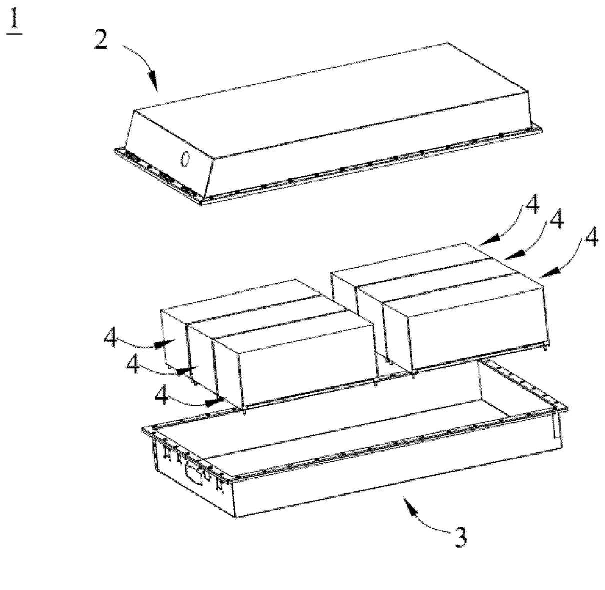


FIG. 5

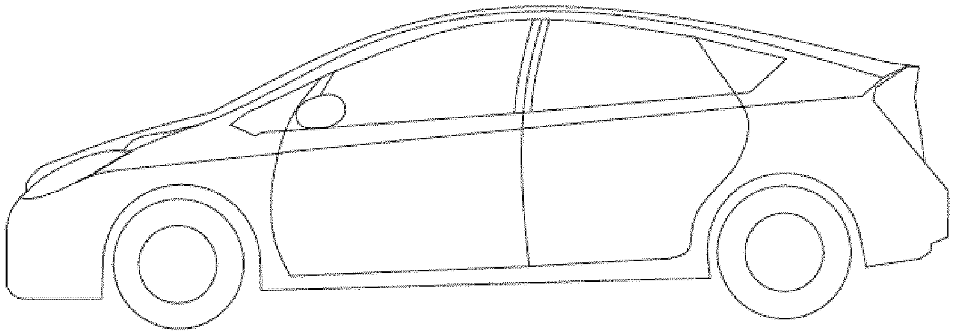

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017117684 A
- US 2018069265 A1
- EP 1926172 A1
- EP 1037293 A1
- CN 1339846 A
- CN 108091925 A
- CN 103107359 A
- US 2013122377 A
- CN 109478473 A
- WO 2017204984 A1
- CN 101507023 A
- WO 2006078866 A2
- JP H08321312 A
- JP 2011049152 A
- CN 101217204 A
- US 2008166637 A1